# EUROPEAN PATENT SPECIFICATION

(11) **EP 0 685 945 B1**
(45) Date of publication and mention of the grant of the patent: **14.10.1998**
(21) Application number: 95303472.5
(22) Date of filing: 22.05.1995
(51) Int. Cl.: H04B 1/38, H01Q 21/30

(54) **Antenna apparatus having antenna elements for different frequencies**
Antennenvorrichtung mit individuellen Antennenelementen für unterschiedliche Frequenzen
Antenne avec des antennes élémentaires pour différentes fréquences

(30) Priority: 23.05.1994 JP 108449/94
(43) Date of publication of application: 06.12.1995
(73) Proprietor: NEC Corporation, Minato-ku, Tokyo 108-01 (JP)
(72) Inventor: Norimatsu, Hidehiko, c/o NEC Corp., Minato-ku, Tokyo 108-01 (JP)
(74) Representative: Abnett, Richard Charles

(56) References cited:
- EP-A- 0 523 867
- EP-A- 0 541 305
- DE-A- 3 738 828
- GB-A- 2 272 575

## Description

The present invention relates to an antenna apparatus for a mobile unit.

It is convenient for a user if he or she can perform communication on different digital cellular schemes with a single mobile unit.

For example, techniques associated with an antenna apparatus for performing communications on different digital cellular schemes with a single mobile unit are disclosed in Japanese Unexamined Patent Publication Nos. 1-194720, 62-234404, and 62-49729, and Japanese Unexamined Utility Model Publication No. 3-113516.

Japanese Unexamined Patent Publication No. 1-194720 discloses a method of dividing a plurality of multiplexed transmission waves into two groups so as to separate their frequencies from each other as much as possible, and respectively transmitting the waves of the two groups through two different reception diversity antennas. Japanese Unexamined Patent Publication No. 62-234404 discloses a technique of broadening the band of a plate-like antenna by placing a passive element near the antenna. Japanese Unexamined Patent Publication No. 62-49729 discloses a technique of preparing two receivers for diversity reception, each of which has an antenna, and using one of the antennas for transmission. Japanese Unexamined Utility Model Publication No. 3-113516 discloses a plate-like antenna which is connected to a resonance circuit to resonate at two frequencies.

According to the above known techniques, respectively, a plurality of antennas are used, the band of an antenna is broadened, and an antenna is modified to resonate at two frequencies. These techniques are effective in achieving their respective objects. However, the above techniques are not very effective in achieving an object of providing a mobile unit which copes with a plurality of types of digital cellular schemes and does not substantially differ, at least in outer appearance, from a mobile unit designed to cope with a single digital cellular scheme.

Although Japanese Unexamined Utility Model Publication No. 3-113516, which discloses the technique of enabling resonance at two frequencies, seems at first glance to be effective for that objective, the band and gain characteristics at the respective frequencies must be sacrificed. Therefore, this technique cannot be employed either.

If a plurality of pole (rod or whip) antennas are mounted on a mobile unit to cope with a plurality of types of digital cellular schemes, the appearance of the mobile unit is spoiled, and its portability deteriorates.

GB-A-2,272,585 discloses a dual antenna for microwave and lower band frequencies. The dual antenna arrangement simultaneously communicates vertically upwards at a microwave frequency and omnidirectionally in the azimuth plane at a lower band frequency.

EP-A-541,305 discloses a method of generating the required frequencies for transmission and reception in a particular mobile phone system which allows the mobile phone to be modified to operate under a different mobile phone system by only changing the filters of the mobile phone circuit.

The present invention in its various aspects is defined in the independent claims 1, 4, 5 below, to which reference should now be made. Advantageous features of the invention are set forth in the appendant claims.

A preferred embodiment of the invention will be described in detail with reference to the drawings, in the form of an antenna apparatus for a mobile unit capable of performing communication based on a plurality of types of digital cellular schemes using different frequencies including two antennas. One of the antennas is tuned to the transmission and reception bands in one digital cellular scheme, and the other antenna is tuned to the transmission and reception bands in another digital cellular scheme. One of the antennas is seen as part of the external appearance of the mobile unit, and the other antenna is housed within the mobile unit. With this arrangement, the mobile unit is provided in a form which is not different in outer appearance from a mobile unit designed to cope with a single system.

The antenna which will be recognized as part of the outer appearance of the mobile unit and the antenna(s) housed within the mobile unit are on different digital cellular schemes. Therefore, a mobile unit which copes with a plurality of types of digital cellular schemes can be provided in a form which is not substantially different in outer appearance from a mobile unit designed to cope with a single digital cellular scheme.

The invention will now be described by way of example with reference to the drawing, in which:
Fig. 1 is a block diagram showing an antenna apparatus embodying the present invention; and
Fig. 2 is a perspective view showing the external appearance of the antenna apparatus of Fig. 1.

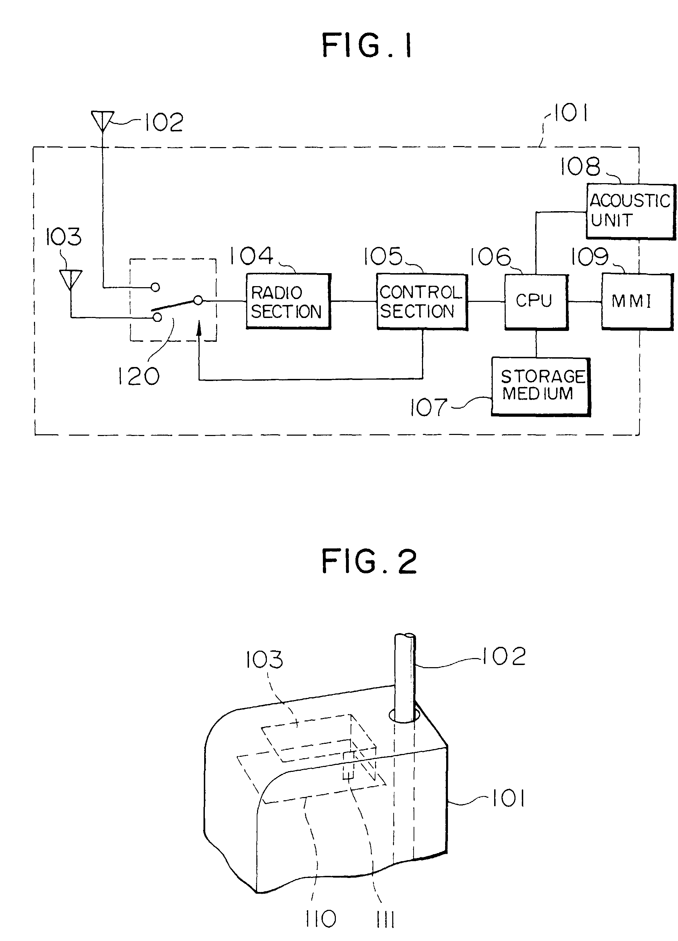

In an antenna apparatus embodying the present invention and shown in Figs. 1 and 2, a mobile unit 101 incorporates a 1.5-GHz-band antenna 103 tuned to the transmission and reception bands in a 1.5-GHz-band digital cellular scheme, a radio section 104, a control section 105, a CPU 106, and a storage medium 107. In addition, the mobile unit 101 includes a 900-MHz-band antenna 102 tuned to the transmission and reception bands in a 900-MHz-band digital cellular scheme, an acoustic unit 108, and an MMI (Man Machine Interface) 109, parts of which are exposed to the exterior. A switch 120 is arranged between the antennas 102 and 103 for switching signal lines for transmitting and receiving signals respectively between the radio section 104 and the antennas 102 and 103.

The signal flow will be briefly described. A signal for transmission is supplied from the acoustic unit 108 to the CPU 106. The signal is then transmitted to an antenna suitable for a selected system via the control section 105 and the radio section 104. A received signal is supplied to the acoustic unit 108 along a reverse flow to the above flow. The MMI 109 includes a keyboard/display and serves to transfer information from/to the user. Communication protocols and sequences for controlling the mobile unit 101 are stored in the storage medium 107. In this case, the radio section 104 and the storage medium 107 can cope with both the 900-Mhz-band system and the 1.5-Ghz-band system.

The user can select communication in the 900-Mhz band or communication in the 1.5-Ghz band through the MMI 109. This selection command is transmitted to the storage medium 107, the control section 105, and the radio section 104 via the CPU 106. With this operation, the communication protocols and the sequences for controlling the mobile unit, which are stored in the storage medium 107, are switched in accordance with the selected communication scheme. In addition, the control section 105 performs switching control of the switch 120 in accordance with the selection command.

For example, while the mobile unit 101 is in a standby state, the control section 105 may monitor whether a signal from a base station can be received or not, thereby determining whether a communication is performed in the 900-Mhz or 1.5-Ghz band. In accordance with the result of this determination obtained by the control section 105, the switch 120 may be switched.

An RF switch formed by a GaAs process, or an RF switch obtained by a combination of P/N diodes, may for example, be used as the switch 120.

As is apparent from Fig. 1, the 1.5-Ghz-band antenna 103 is incorporated in the mobile unit 101, and hence the mobile unit does not differ in outer appearance from a mobile unit designed to cope with a single digital cellular scheme. Fig. 2 shows this more clearly. The 1.5-Ghz-band antenna 103 is a plate-like antenna, which is mounted on a shield 110 and receives power via a power supply metal member 111. The 900-Mhz-band antenna 102 is a rod-like antenna. Only the 900-Mhz-band antenna 102 is seen on the outer appearance of the mobile unit 101. Therefore, the mobile unit does not differ in outer appearance from a mobile unit designed to cope with a single digital cellular scheme, in spite of the fact that the mobile unit copes with a plurality of types of digital cellular schemes using different frequencies.

In this embodiment, since the volume of an antenna is proportional to the cube of the wavelength, the 1.5-Ghz-band antenna is used as a built-in antenna in consideration of easy mounting of the antenna in the mobile unit. However, it is apparent that the 900-Mhz-band antenna 102 may be used as the built-in antenna without posing any problems except for the problem of mounting.

As has been described above, in the illustrated antenna apparatus for a mobile unit capable of performing communication on a plurality of types of digital cellular scheme, at least two antennas are provided, and at least one of the antennas is tuned to a band different from the transmission and reception bands in one digital cellular scheme. Therefore, a mobile unit which is capable of operation with a plurality of types of digital cellular schemes using different frequencies can be provided in a form which is not different in external appearance from a mobile unit designed to cope with a single digital cellular scheme.

## Claims

1. A mobile unit capable of performing communication based on a plurality of types of digital cellular scheme, comprising a radio section (104), a first antenna (102) tuned to transmission and reception bands used in at least one first digital cellular scheme; a second antenna (103) tuned to transmission and reception bands used in a second digital cellular scheme different from the first digital cellular scheme; and switching means (105, 120) for connecting a selected one of the two antennas (102, 103) to the radio section (104) of the mobile unit for transmission and reception over the selected antenna.

2. A mobile unit according to claim 1 wherein at least one antenna (102) forms a part of the external appearance of the mobile unit (101), and the remaining antenna (103) or antennas are housed within the mobile unit.

3. A mobile unit according to claim 1 or claim 2 characterised in that the mobile unit comprises:
an acoustic unit (108) for either generating a signal for transmission or converting a received signal into sound;
a Man Machine interface (109) for transferring information between the mobile units and its user;
a memory (107) for storing communication protocols and sequences for at least two different digital cellular schemes;
a central processing unit (106) connected to the acoustic unit (108), Man Machine interface (109), memory (107), radio section (104), and switching means (105, 120) for selecting one of the different digital cellular schemes and its associated antenna and communication protocols and sequences.

4. A method of transmitting radio signals comprising the steps of :
providing an acoustic unit (108) for generating a signal representative of a sound input, a radio section (104) having an input coupled to the output of the acoustic unit for generating a signal for radio transmission, at least two antennas (102, 103) tuned to respective different digital cellular schemes, switching means (105, 120) for selectively coupling the output of the radio section to the antennas, and a control section (105);
supplying a signal for transmission from the acoustic unit (108) to the radio section (104);
selecting one of at least two different pre-determined digital cellular schemes; and
switching the switching means under the control of the control section to couple the radio section (104) with a selected one of the antennas tuned to the transmission and reception bands of the selected digital cellular scheme to transmit the sound from the radio section over the selected digital cellular scheme.

5. A method of receiving radio signals comprising the steps of:
providing an acoustic unit (108) for generating a sound output from an input signal, a radio section (104) for radio reception and having an output coupled to an input of the acoustic unit, at least two antennas (102, 103) tuned to respective different digital cellular schemes, switching means (105, 120) for selectively coupling the antennas to the input of the radio section, and a control section (105);
selecting one of at least two different predetermined digital cellular schemes;
switching the switching means (105, 120) under the control of the control section to couple the radio section (104) with a selected one of the antennas tuned to the transmission and reception bands of the selected digital cellular scheme to apply a signal received over the selected digital cellular scheme to the radio section;
receiving a radio signal corresponding to the selected one of the pre-determined cellular schemes over the selected antenna; and
supplying a signal from the radio section (104) to the acoustic unit (108) to generate a sound output corresponding to the received radio signal.

## Patentansprüche

1. Mobile Einheit, die in der Lage ist, auf der Grundlage von mehreren Arten von digitalen zellularen Schemen Kommunikation durchzuführen, mit einem Funkteil (104), einer ersten Antenne (102), die auf Übertragungs- und Empfangsbänder abgestimmt ist, die zumindest in einem ersten digitalen zellularen Schema verwendet werden; einer zweiten Antenne (103), die auf Übertragungs- und Empfangsbänder abgestimmt ist, die in einem zweiten digitalen zellularen Schema verwendet werden, das sich von dem ersten digitalen zellularen Schema unterscheidet; und einer Schalteinrichtung (105, 120) zum Verbinden einer gewählten der beiden Antennen (102, 103) mit dem Funkteil (104) der mobilen Einheit zur Übertragung und zum Empfang über die gewählte Antenne.

2. Mobile Einheit nach Anspruch 1, wobei zumindest eine Antenne (102) einen Teil des äußeren Erscheinungsbilds der mobilen Einheit (101) bildet und die verbleibende Antenne (103) oder Antennen in der mobilen Einheit untergebracht sind.

3. Mobile Einheit nach Anspruch 1 oder 2, dadurch gekennzeichnet, daß die mobile Einheit aufweist:
eine Akustikeinheit (108) entweder zur Erzeugung eines Signals zur Übertragung oder Umwandlung eines empfangenen Signals in Ton;
eine Mensch-Maschine-Schnittstelle (109) zum Übertragen von Information zwischen den mobilen Einheiten und ihrem Anwender;
einen Speicher (107) zum Speichern von Kommunikationsprotokollen und Sequenzen für mindestens zwei verschiedene digitale zellulare Schema;
eine zentrale Verarbeitungseinheit (106), die mit der Akustikeinheit (108), einer Mensch-Maschine-Schnittstelle (109), einem Speicher (107), einem Funkteil (104) und einer Schalteinrichtung (105, 120) verbunden ist, zum Wählen eines der verschiedenen digitalen zellularen Schemen und ihrer zugeordneten Antenne und Kommunikationsprotokolle und Sequenzen.

4. Verfahren zur Übertragung von Funksignalen mit den Schritten:
Bereitstellen einer Akustikeinheit (108) zum Erzeugen eines Signals, das eine Toneingabe darstellt, eines Funkteils (104) mit einem Eingang, der mit dem Ausgang der Akustikeinheit gekoppelt ist, zum Erzeugen eines Signals zur Funkübertragung, zumindest zweier Antennen (102, 103), die auf jeweils verschiedene digitale zellulare Schemen abgestimmt sind, einer Schalteinrichtung (105, 120) zum selektiven Koppeln des Ausgangs des Funkteils mit den Antennen und eines Steuerteils (105);
Übergeben eines Signals zur Übertragung von der Akustikeinheit (108) an den Funkteil (104);
Wählen eines von zumindest zwei verschiedenen vorbestimmten digitalen zellularen Schemen; und
Umschalten der Schalteinrichtung unter der Steuerung des Steuerteils, um den Funkteil (104) mit einer gewählten der Antennen zu koppeln, die auf die Übertragungs- und Empfangsbänder des gewählten digitalen zellularen Schemas abgestimmt ist, um den Ton vcm Funkteil über das gewählte digitale zellulare Schema zu übertragen.

5. Verfahren zum Empfangen von Funksignalen mit den Schritten:
Bereitstellen einer Akustikeinheit (108) zum Erzeugen einer Tonausgabe aus einem Eingangssignal, eines Funkteils (104) zum Funkempfang und mit einem Ausgang, der mit einem Eingang der Akustikeinheit gekoppelt ist, zumindest zweier Antennen (102, 103), die auf jeweils andere digitale zellulare Schemen abgestimmt sind, eine Schalteinrichtung (105, 120) zum selektiven Koppeln der Antennen mit dem Eingang des Funkteils und eines Steuerteils (105);
Wählen eines von zumindest zwei verschiedenen vorbestimmten digitalen zellularen Schemen;
Umschalten der Schalteinrichtung (105, 120) unter der Steuerung des Steuerteils, um den Funkteil (104) mit einer gewählten der Antennen zu koppeln, die auf die Übertragungs- und Empfangsbänder des gewählten digitalen zellularen Schemas abgestimmt ist, um ein über das gewählte digitale zellulare Schema empfangenes Signal an den Funkteil anzulegen;
Empfangen eines Funksignals, das dem gewählten der vorbestimmten zellularen Schemen entspricht, über die gewählte Antenne; und
Übergeben eines Signals vom Funkteil (104) an die Akustikeinheit (108), um eine Tonausgabe zu erzeugen, die dem empfangenen Funksignal entspricht.

## Revendications

1. Unité mobile capable de réaliser une transmission basée sur plusieurs types de système cellulaire numérique, comprenant une partie radio (104), une première antenne (102) réglée sur des bandes d'émission et de réception utilisées dans au moins un premier système cellulaire numérique ; une seconde antenne (103) réglée sur des bandes d'émission et de réception utilisées dans un second système cellulaire numérique différent du premier système cellulaire numérique ; et des moyens de commutation (105, 120) pour connecter une des deux antennes (102, 103) qui est sélectionnée à la partie radio (104) de l'unité mobile pour une émission et une réception sur l'antenne sélectionnée.

2. Unité mobile selon la revendication 1, dans laquelle au moins une antenne (102) forme une partie de l'apparence extérieure de l'unité mobile (101), et dans laquelle l'antenne ou les antennes restantes (103 ) sont logées à l'intérieur de l'unité mobile.

3. Unité mobile selon la revendication 1 ou 2, caractérisée en ce que l'unité mobile comprend :
une unité acoustique (108) pour produire un signal pour l'émission, ou pour convertir un signal reçu en son ;
une interface Homme-Machine (109) pour transférer des informations entre l'unité mobile et son utilisateur ;
une mémoire (107) pour mémoriser des protocoles et des séquences de transmission pour au moins deux systèmes cellulaires numériques différents ;
une unité centrale de traitement (106) connectée à l'unité acoustique (108), à l'interface Homme-Machine (109), à la mémoire (107), à la partie radio (104), et aux moyens de commutation (105, 120) pour sélectionner un des systèmes cellulaires numériques différents et son antenne associée ainsi que des protocoles et des séquences de transmission.

4. Procédé d'émission de signaux radio comprenant les étapes consistant à :
fournir une unité acoustique (108) pour produire un signal représentant une entrée sonore, une partie radio (104) ayant une entrée connectée à la sortie de l'unité acoustique pour produire un signal pour l'émission radio, au moins deux antennes (102, 103) réglées sur des systèmes cellulaires numériques différents respectifs, des moyens de commutation (105, 120) pour connecter de façon sélective la sortie de la partie radio aux antennes, et une partie commande (105) ;
délivrer un signal pour l'émission depuis l'unité acoustique (108) vers la partie radio (104) ;
sélectionner un des au moins deux systèmes cellulaires numériques prédéterminés différents ; et
commuter les moyens de commutation obéissant à la partie commande pour connecter la partie radio (104) à une des antennes qui est sélectionnée, réglée sur les bandes d'émission et de réception du système cellulaire numérique sélectionné pour émettre le son depuis la partie radio sur le système cellulaire numérique sélectionné.

5. Procédé de réception de signaux radio comprenant les étapes consistant à :
fournir une unité acoustique (108) pour produire une sortie sonore depuis un signal d'entrée, une partie radio (104) pour une réception radio et ayant une sortie connectée à une entrée de l'unité acoustique, au moins deux antennes (102, 103) réglées sur des systèmes cellulaires numériques différents respectifs, des moyens de commutation (105, 120) pour connecter de façon sélective les antennes à l'entrée de la partie radio, et une partie commande (105) ;
sélectionner au moins deux systèmes cellulaires numériques prédéterminés différents ;
commuter les moyens de commutation (105, 120) obéissant à la partie commande pour connecter la partie radio (104) à une des antennes qui est sélectionnée, réglée sur les bandes d'émission et de réception du système cellulaire numérique sélectionné pour appliquer un signal reçu sur le système cellulaire numérique sélectionné à la partie radio ;
recevoir un signal radio correspondant à celui des systèmes cellulaires prédéterminés qui est sélectionné sur l'antenne sélectionnée ; et
délivrer un signal depuis la partie radio (104) vers l'unité acoustique (108) pour produire une sortie sonore correspondant au signal radio reçu.
